# EUROPÄISCHE PATENTSCHRIFT

(11) **EP 4 028 215 B1**
(45) Veröffentlichungstag und Bekanntmachung des Hinweises auf die Patenterteilung: **06.12.2023**
(21) Anmeldenummer: 20768529.8
(22) Anmeldetag: 01.09.2020
(51) Int. Cl.: B24B 19/02, B23F 15/08, B24B 1/00

(54) **VERFAHREN ZUR HERSTELLUNG EINES ROTORS EINES SCHRAUBENVERDICHTERS ODER EINES WERKSTÜCKS MIT SCHNECKENFÖRMIGEM PROFIL**
METHOD FOR PRODUCING A ROTOR OF A SCREW COMPRESSOR OR A WORKPIECE WITH A HELICAL PROFILE
PROCÉDÉ DE RÉALISATION D'UN ROTOR D'UN COMPRESSEUR À VIS OU D'UNE PIÈCE DOTÉE D'UN PROFIL HÉLICOÏDAL

(30) Priorität: 11.09.2019 DE 102019124394
(43) Veröffentlichungstag der Anmeldung: 20.07.2022
(73) Patentinhaber: Kapp Niles GmbH & Co. KG, 96450 Coburg (DE)
(72) Erfinder: KAPP, Martin A., 96450 Coburg (DE)
(74) Vertreter: Gosdin, Carstensen & Partner Patentanwälte Partnerschaftgesellschaft mbB
(86) Internationale Anmeldenummer: PCT/EP2020/074362
(87) Internationale Veröffentlichungsnummer: WO 2021/047961

(56) Entgegenhaltungen:
- EP-A2- 1 987 920
- WO-A1-2017/157698
- CH-A2- 706 303
- DE-A1- 19 706 867
- JP-A- H10 311 288

## Beschreibung

Die Erfindung betrifft ein Verfahren zur Herstellung eines Rotors eines Schraubenverdichters oder eines Werkstücks mit schneckenförmigem Profil, wobei der Rotor bzw. das Werkstück mit schneckenförmigem Profil an seinem Außenumfang eine Anzahl schraubenförmig verlaufender Profile in Form nutförmiger Vertiefungen aufweist, wobei die nutförmigen Vertiefungen zwecks Erzeugung einer genauen Profilierung mittels eines Schleifwerkzeugs feinbearbeitet werden, wobei die Feinbearbeitung der nutförmigen Vertiefungen mit einem Schleifwerkzeug erfolgt, welches die Oberfläche der nutförmigen Vertiefung während des Schleifvorgangs lediglich an einem Punkt berührt, wobei die gesamte zu bearbeitende Oberfläche durch linienweises Abfahren der zu bearbeitenden Oberfläche mittels des Schleifwerkzeugs erfolgt (topologisches Schleifen).

In der dem Oberbegriff von Anspruch 1 zugrunde gelegten DE 197 06 867 A1 ist ein Verfahren zum Profilieren einer Schleifschnecke beschrieben, die mit Blick auf den durchzuführenden Abrichtvorgang als Werkstück mit schneckenförmigem Profil angesprochen werden kann. Hier ist vorgesehen, dass der Abrichtvorgang so erfolgt, dass ein Abrichtwerkzeug mit im Radialschnitt kreisförmig ausgebildeter Abrasivfläche linienweise die nutförmigen Vertiefungen der Schleifschnecke abrichtet.

Ähnliche und weitere Lösungen offenbaren die WO 2017/157698 A1**,** die EP 1 987 920 A2**,** die CH 706 303 A2 und die JP H10 311288 A.

Ein Verfahren zum Herstellen eines Schraubenverdichterrotors ist aus der DE 10 2008 035 525 B3 bekannt. Zum Schleifen der Profilierung am Außenumfang des Rotors, d. h. der nutförmigen Vertiefungen, wird hier ein schneckenförmiges Werkzeug eingesetzt, und zwar sowohl zum Vorschleifen als auch zum Fertigschleifen der Profilierung. Schon vorher ist es bekannt gewesen, die Profilierung eines solchen Rotors dadurch herzustellen, dass eine Profil-Schleifscheibe eingesetzt wird, deren Schleif-Profil dem Schnitt durch das Profil entlang des Vorschubs der Schleifscheibe entspricht.

Wenngleich hiermit grundsätzlich eine präzise Bearbeitung eines solchen Rotors erfolgen kann, gelingt dies oftmals nicht mehr, wenn sich die Steigung der Profilierung des Rotors über die axiale Erstreckung des Rotors verändert. Ein Schraubenverdichter mit derartigen Rotoren ist beispielsweise in der US 3 424 373 A offenbart. Gleichermaßen sind solche Rotoren auch aus der US 9 770 772 B2 bekannt, wobei hier zum Schleifen der Profilierung wiederum auf Profil-Schleifscheiben zurückgegriffen wird, deren Schleifprofil dem Schnitt durch die zu bearbeitende Profilierung entspricht.

Der Erfindung liegt die **Aufgabe** zugrunde, ein gattungsgemäßes Verfahren zur Feinbearbeitung der Rotoren eines Schraubenverdichters bzw. eines Werkstücks mit schneckenförmigem Profil so weiterzubilden, dass insbesondere auch die Fertigung von Rotoren bzw. Werkstücken mit über die axiale Erstreckung des Rotors bzw. Werkstücks veränderlicher Steigung möglichst präzise möglich ist.

Die **Lösung** dieser Aufgabe durch die Erfindung sieht vor, dass die nutförmigen Vertiefungen des Rotor oder des Werkstücks mit schneckenförmigem Profil über den axialen Verlauf des Rotors oder des Werkstücks mit schneckenförmigem Profil eine veränderliche Steigung oder ein veränderliches Profil aufweisen, wobei ein Schleifwerkzeug in Form einer Schleifscheibe verwendet wird, wobei der abrasive Abschnitt der Schleifscheibe im Radialschnitt ein gotisches Profil aufweist.

Das linienweise Abfahren erfolgt nach einer bevorzugten Vorgehensweise, indem eine Anzahl Schleifhübe durchgeführt wird, bei denen das Schleifwerkzeug in radiale Richtung relativ zum Rotor oder zum Werkstück mit schneckenförmigem Profil bewegt wird.

Das linienweise Abfahren kann auch gemäß einer anderen bevorzugten Vorgehensweise erfolgen, indem eine Anzahl Schleifhübe durchgeführt wird, bei denen das Schleifwerkzeug in axiale Richtung relativ zum Rotor oder zum Werkstück mit schneckenförmigem Profil bewegt wird.

Schließlich sieht eine weitere Variante des Verfahrens vor, dass das linienweise Abfahren erfolgt, indem eine Anzahl Schleifhübe durchgeführt wird, bei denen das Schleifwerkzeug kombiniert in radiale Richtung und in axiale Richtung relativ zum Rotor oder zum Werkstück mit schneckenförmigem Profil bewegt wird. Damit kann die Vorschubrichtung in einem beliebigen Winkel zur Rotationsachse des Rotors bzw. des Werkstücks mit schneckenförmigem Profil liegen.

Weiterhin wird vorzugsweise als Schleifscheibe ein Stahlgrundkörperwerkzeug verwendet wird, welches mit einem Abrasivmaterial belegt ist, welches am Stahlgrundkörper mittels galvanischer Beschichtung gebunden ist. Alternativ ist es allerdings auch möglich, abrichtbare Schleifscheiben mit keramischem Grundkörper einzusetzen.

Bei dem veränderlichen Profil des Werkstücks nähert sich beispielsweise über den axialen Verlauf des Rotors bzw. des Werkstücks der Fußkreis dem Kopfkreis an oder entfernt sich von diesem (Konizität im Fußzylinder).

Beim Schleifen der nutförmigen Vertiefungen können die Drehachse des Rotors bzw. des Werkstücks mit schneckenförmigem Profil und die radiale Zustellbewegung der Schleifscheibe relativ zueinander interpolierend verändert werden.

Entsprechend ist es auch möglich, dass beim Schleifen der nutförmigen Vertiefungen die Drehachse des Rotors bzw. des Werkstücks mit schneckenförmigem Profil und die Vorschubachse in Richtung der Drehachse des Rotors relativ zueinander interpolierend verändert werden.

Eine Weiterbildung für beide genannten Vorgehensweisen sieht vor, dass beim Schleifen der nutförmigen Vertiefungen weiterhin die Schwenkachse des Schleifzeugs und/oder die Vorschubachse der Schleifscheibe in axiale Richtung der Schleifscheibe interpolierend verändert werden.

Somit schlägt die vorliegende Erfindung ein topologisches Generierungs-Schleifen der Rotoren von Schraubenverdichtern oder von Werkstücken mit schneckenförmigem Profil vor, welches sich nicht nur, allerdings bevorzugt, für solche Rotoren bzw. Werkstücke empfiehlt, deren Profilierung über die axiale Erstreckung des Rotors eine veränderliche Steigung aufweist.

Durch eine Verdrehung des Werkstücks (insbesondere des Rotors) und eine radiale Bewegung der Schleifscheibe (relativ zum Rotor) kann jeder Punkt im Stirnschnitt der zu bearbeitenden Profilierung angefahren werden. Wird zusätzlich die Vorschubachse in Rotor-Breitenrichtung (d. h. in Achsrichtung des Rotors bzw. des Werkstücks mit schneckenförmigem Profil) genutzt, kann von der abrasiven Fläche der Schleifscheibe jeder Punkt im Raum angefahren werden.

Durch Hinzunahme der Schwenkachse der Schleifscheibe und der Tangentialachse (in Richtung der Rotationsachse der Schleifscheibe) der Schleifscheibe kann bei entsprechender rechnergestützter geometrischer Betrachtung der gesamten nutförmigen Vertiefung eine kollisionsfreie Bearbeitung gewährleistet werden. Hierzu werden bis zu fünf Maschinenachsen, wie oben erwähnt, gleichzeitig (interpolierend) verfahren.

In der Zeichnung ist ein Ausführungsbeispiel der Erfindung dargestellt. Es zeigen:
- Fig. 1: in perspektivischer Darstellung zwei miteinander kämmende Rotoren eines Schraubenverdichters, wobei die Steigung der schraubenförmigen Profilierung der Rotoren über deren axiale Erstreckung konstant ist,
- Fig. 2: in perspektivischer Darstellung zwei miteinander kämmende Rotoren eines Schraubenverdichters, wobei die Steigung der schraubenförmigen Profilierung der Rotoren über deren axiale Erstreckung variabel ist,
- Fig. 3: schematisch in einem Stirnschnitt des Rotor die Eingriffsverhältnisse einer Schleifscheibe in das nutförmige Profil der schraubenförmigen Profilierung eines Rotor während des Schleifvorgangs,
- Fig. 4: in perspektivischer Darstellung die Eingriffsverhältnisse der Schleifscheibe in das nutförmige Profil der schraubenförmigen Profilierung eines Male-Rotor während des Schleifvorgangs,
- Fig. 5: in perspektivischer Darstellung die Eingriffsverhältnisse der Schleifscheibe in das nutförmige Profil der schraubenförmigen Profilierung eines Female-Rotor während des Schleifvorgangs,
- Fig. 6: schematisch den Verlauf der Bewegung einer Schleifscheibe über die Oberfläche der nutförmigen Vertiefung gemäß einer ersten Ausführungsform der Erfindung und
- Fig. 7: schematisch den Verlauf der Bewegung der Schleifscheibe über die Oberfläche der nutförmigen Vertiefung gemäß einer zweiten Ausführungsform der Erfindung.

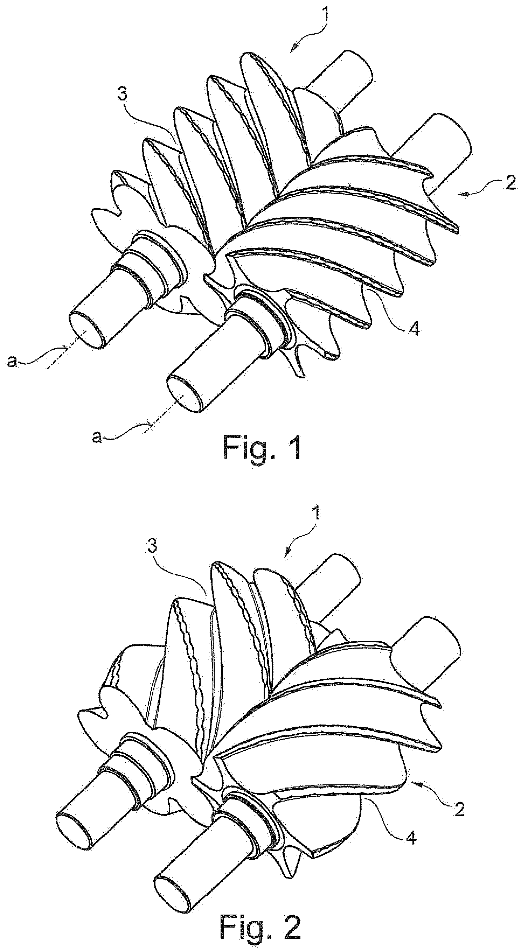

In Fig. 1 ist ein Paar kämmender Rotoren eines Schraubenverdichters zu sehen, wobei ein erster Rotor 1 (male) mit einem zweiten Rotor 2 (female) in Eingriff ist. Beide Rotoren 1, 2 weisen an ihrem Außenumfang jeweils schraubenförmige bzw. nutförmige Vertiefungen 3 bzw. 4 auf, die zueinander korrespondieren. Bei Rotation des Paares Rotoren wird somit in bekannter Weise ein Fördereffekt erzeugt. Die jeweilige Drehachse der Rotoren ist mit a bezeichnet.

Während bei den Rotoren gemäß Figur 1 die Steigung der nutförmigen Vertiefung über die axiale Erstreckung des Rotors konstant ist, geht aus Figur 2 hervor, dass dies hier nicht der Fall ist. Die Steigung der nutförmigen Vertiefungen ist am rechten Ende der Rotoren kleiner als am linken; die Steigung nimmt dabei also von rechts nach links allmählich zu.

Insbesondere für derartige Rotoren mit variabler Steigung empfiehlt sich das erfindungsgemäße Schleifverfahren.

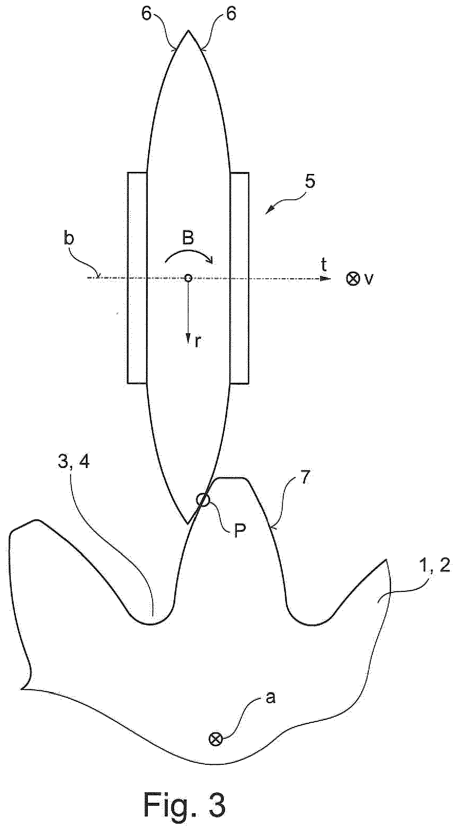

Dieses ist in Figur 3 illustriert: Hier ist in einem Stirnschnitt zu erkennen (die Drehachse a des Rotor 1, 2 steht senkrecht auf der Zeichenebene), das ein Schleifwerkzeug 5 in Form einer Schleifscheibe zum Einsatz kommt, um die Oberfläche 7 der nutförmigen Vertiefungen 3, 4 punktweise bzw. linienweise zu schleifen. Die Schleifscheibe 5 weist ein gotisches Profil 6 auf, welches im Radialschnitt aus zwei Bögen besteht, die in der Spitze zusammengeführt sind.

Die Schleifscheibe 5 kann relativ zum Rotor 1, 2 in radiale Zustellrichtung r bewegt werden, während der Rotor 1, 2 gleichzeitig um seine Drehachse a interpolierend gedreht wird, d. h. die sich aus der Soll-Geometrie ergebende Lage der abrasiven Fläche der Schleifscheibe 5 wird zwischen der Bewegung der beiden Achsen a und r präzise geregelt. Weiterhin ist es möglich, dass die Schleifscheibe 5 simultan in Richtung der Vorschubachse t bewegt wird, die in axiale Richtung b der Schleifscheibe 5 weist. Schließlich kann auch die Schleifscheibe 5 um die Schwenkachse B bewegt werden, die in Figur 3 senkrecht auf der Zeichenebene und somit senkrecht auf der Achse b steht.

Während des Schleifvorgangs wird darüber hinaus eine relative Bewegung zwischen Werkstück (Rotor) und Werkzeug (Schleifscheibe) in Richtung der Vorschubachse v vorgenommen.

Es ergibt sich somit, dass bis zu fünf Maschinenachsen simultan bewegt werden können, um die Oberfläche 7 mit der Schleifscheibe 5 zu schleifen.

Wesentlich ist, dass es dabei stets nur zur punktförmigen Berührung zwischen Oberfläche 7 und abrasiver Fläche der Schleifscheibe 5 kommt, wie es in Figur 3 angedeutet ist. Unter punktförmiger Berührung ist dabei zu verstehen, dass der Kontaktbereich zwischen Werkstück und Werkzeug nur eine geringe Fläche aufweist (im Unterschied hierzu liegt beim Schleifen mit einer Profilschleifscheibe eine linienförmige Berührung vor).

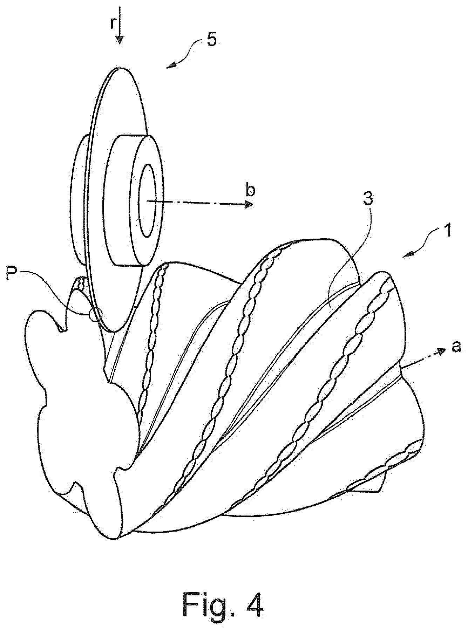

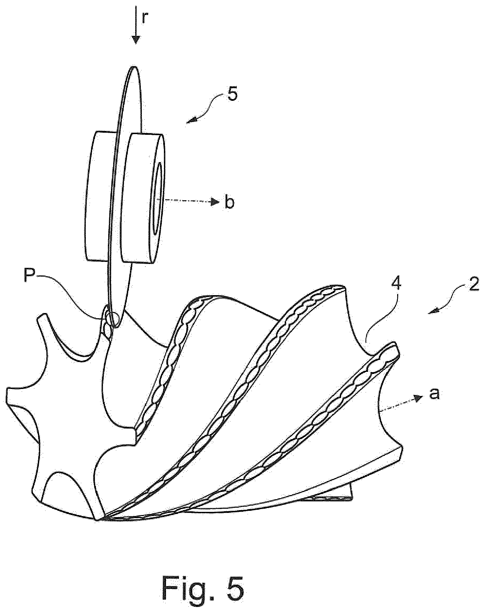

In Figur 4 ist diese Situation noch einmal perspektivisch dargestellt. Die nutförmigen Vertiefungen 3 des Rotors 1 (male) werden durch die Schleifscheibe 5 bearbeitet. In Figur 5 ist dieselbe Situation für den Rotor 2 (female) skizziert.

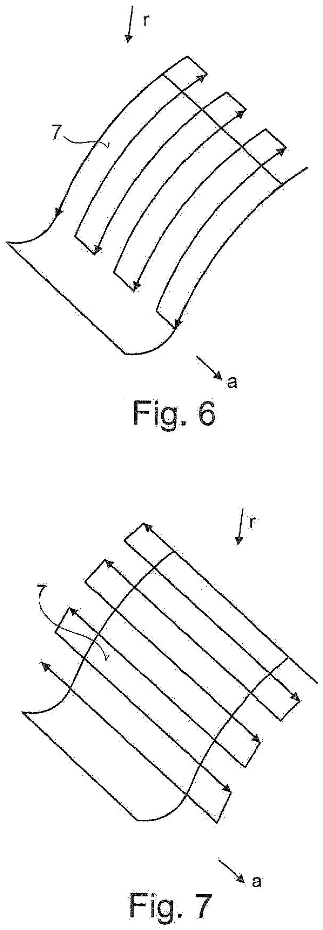

Figur 6 zeigt die Bearbeitung der Oberfläche 7 der nutförmigen Vertiefung 3, 4 im Radialhub (in Profilhöhenrichtung). Angedeutet ist, wie die einzelnen Bearbeitungsschübe erfolgen, indem die Schleifscheibe 5 in radiale Richtung r bewegt wird, wobei sich der Rotor 1, 2 korrespondierend gleichzeitig um seine Drehachse a dreht, um die Oberfläche 7 mit der abrasiven Fläche der Schleifscheibe abzufahren. Nach Ausführung eines solchen Bearbeitungshubes wird an den Umkehrpunkten des in Figur 6 skizzierten mäanderförmigen Weges die Schleifscheibe in axiale Richtung a weiterverfahren.

Indes zeigt Figur 7 die Bearbeitung der Oberfläche 7 im Axialhub (in Profilbreitenrichtung). Zu erkennen ist hier, wie die Schleifscheibe in axiale Richtung a des Rotor verfahren wird, wobei natürlich gemäß der Geometrie der zu erzeugenden Profilierung der Rotor 1, 2 um seine Drehachse a korrespondierend gedreht wird. Nach Ausführung eines solchen Bearbeitungshubs wird an den Umkehrpunkten des in Figur 7 skizzierten mäanderförmigen Weges die Schleifscheibe in radiale Richtung r weiterverfahren. Zum Axialhub sei angemerkt, dass hiermit auch die nutförmige Vertiefung 3, 4 ins Volle geschliffen werden kann.

Es sei erwähnt, dass auch eine Kombination der Lösungen gemäß den Figuren 6 und 7 sinnvoll sein kann. In diesem Falle liegt dann ein kombinierter Radial- und Axialhub vor, so dass die Vorschubrichtung in einem Winkel zur Rotationsachse des Rotors liegt.

Weiterhin sei angemerkt, dass die Figuren 6 und 7 aufgrund ihrer schematischen Darstellung nur die Bearbeitung der Flanken der nutförmigen Vertiefung zeigen. Natürlich kann mit dem Verfahren auch der Kopf- und/oder Fußbereich des Profils des Rotors bzw. des Werkstücks mit schneckenförmigem Profil geschliffen werden.

### Bezugszeichenliste:

- 1: Rotor eines Schraubenverdichters (male)
- 2: Rotor eines Schraubenverdichters (female)
- 3: nutförmige Vertiefung
- 4: nutförmige Vertiefung
- 5: Schleifwerkzeug (Schleifscheibe)
- 6: gotisches Profil
- 7: Oberfläche der nutförmigen Vertiefung

- P: Kontaktpunkt zwischen Schleifwerkzeug und Oberfläche des zu bearbeitenden Profils

- r: radiale Zustellrichtung
- a: axiale Richtung des Rotors (Drehachse des Rotors)
- b: axiale Richtung der Schleifscheibe
- v: Vorschubachse in Richtung der Drehachse des Rotors
- B: Schwenkachse der Schleifscheibe
- t: Vorschubachse der Schleifscheibe in axiale Richtung der Schleifscheibe

## Patentansprüche

1. Verfahren zur Herstellung eines Rotors (1, 2) eines Schraubenverdichters oder eines Werkstücks mit schneckenförmigem Profil, wobei der Rotor (1, 2) oder das Werkstück mit schneckenförmigem Profil an seinem Außenumfang eine Anzahl schraubenförmig verlaufender Profile in Form nutförmiger Vertiefungen (3, 4) aufweist, wobei die nutförmigen Vertiefungen (3, 4) zwecks Erzeugung einer genauen Profilierung mittels eines Schleifwerkzeugs (5) feinbearbeitet werden, wobei die Feinbearbeitung der nutförmigen Vertiefungen (3, 4) mit einem Schleifwerkzeug (5) erfolgt, welches die Oberfläche der nutförmigen Vertiefung (3, 4) während des Schleifvorgangs lediglich an einem Punkt (P) berührt, wobei die gesamte zu bearbeitende Oberfläche durch linienweises Abfahren der zu bearbeitenden Oberfläche mittels des Schleifwerkzeugs (5) erfolgt,
**dadurch gekennzeichnet, dass**
die nutförmigen Vertiefungen (3, 4) des Rotors (1, 2) oder des Werkstücks mit schneckenförmigem Profil über den axialen Verlauf des Rotors (1, 2) oder des Werkstücks mit schneckenförmigem Profil eine veränderliche Steigung oder ein veränderliches Profil aufweisen, wobei ein Schleifwerkzeug (5) in Form einer Schleifscheibe verwendet wird, wobei der abrasive Abschnitt der Schleifscheibe (5) im Radialschnitt ein gotisches Profil (6) aufweist.

2. Verfahren nach Anspruch 1, **dadurch gekennzeichnet, dass** das linienweise Abfahren erfolgt, indem eine Anzahl Schleifhübe durchgeführt wird, bei denen das Schleifwerkzeug (5) in radiale Richtung (r) relativ zum Rotor (1, 2) oder zum Werkstück mit schneckenförmigem Profil bewegt wird.

3. Verfahren nach Anspruch 1, **dadurch gekennzeichnet, dass** das linienweise Abfahren erfolgt, indem eine Anzahl Schleifhübe durchgeführt wird, bei denen das Schleifwerkzeug (5) in axiale Richtung (a) relativ zum Rotor (1, 2) oder zum Werkstück mit schneckenförmigem Profil bewegt wird.

4. Verfahren nach Anspruch 1, **dadurch gekennzeichnet, dass** das linienweise Abfahren erfolgt, indem eine Anzahl Schleifhübe durchgeführt wird, bei denen das Schleifwerkzeug (5) kombiniert in radiale Richtung (r) und in axiale Richtung (a) relativ zum Rotor (1, 2) oder zum Werkstück mit schneckenförmigem Profil bewegt wird.

5. Verfahren nach einem der Ansprüche 1 bis 4, **dadurch gekennzeichnet, dass** als Schleifscheibe (5) ein Stahlgrundkörperwerkzeug verwendet wird, welches mit einem Abrasivmaterial belegt ist, welches am Stahlgrundkörper mittels galvanischer Beschichtung gebunden ist.

6. Verfahren nach einem der Ansprüche 1 bis 5, **dadurch gekennzeichnet, dass** beim Schleifen der nutförmigen Vertiefungen (3, 4) die Drehachse (a) des Rotors (1, 2) oder des Werkstücks mit schneckenförmigem Profil und die radiale Zustellbewegung (r) der Schleifscheibe (5) relativ zueinander interpolierend verändert werden.

7. Verfahren nach einem der Ansprüche 1 bis 5, **dadurch gekennzeichnet, dass** beim Schleifen der nutförmigen Vertiefungen (3, 4) die Drehachse (a) des Rotors (1, 2) oder des Werkstücks mit schneckenförmigem Profil und die Vorschubachse (v) in Richtung der Drehachse (a) des Rotors (1, 2) oder des Werkstücks mit schneckenförmigem Profil relativ zueinander interpolierend verändert werden.

8. Verfahren nach Anspruch 6 oder 7, **dadurch gekennzeichnet, dass** beim Schleifen der nutförmigen Vertiefungen (3, 4) weiterhin die Schwenkachse (B) des Schleifzeugs (5) und/oder die Vorschubachse (t) der Schleifscheibe (5) in axiale Richtung (b) der Schleifscheibe (5) interpolierend verändert werden.

## Claims

1. Method for producing a rotor (1, 2) of a screw compressor or a workpiece with a helical profile, wherein the rotor (1, 2) or the workpiece with a helical profile has a number of profiles in the form of groove-shaped recesses (3, 4) running in a spiral manner on its outer circumference, wherein the groove-shaped recesses (3, 4) are fine-machined using a grinding tool (5) for the purpose of generating a precise profile, wherein the groove-shaped recesses (3, 4) are fine-machined with a grinding tool (5) which only touches the surface of the groove-shaped recess (3, 4) at one point (P) during the grinding process, wherein the entire surface to be machined is machined by the grinding tool (5) through line-by-line traversing of the surface to be machined,
**characterized in that**
the groove-shaped recesses (3, 4) of the rotor (1, 2) or of the workpiece with a helical profile have a variable pitch or a variable profile over the axial course of the rotor (1, 2) or of the workpiece with a helical profile, wherein a grinding tool (5) in the form of a grinding wheel is used, wherein the abrasive section of the grinding wheel (5) has a gothic profile (6) in radial section.

2. Method according to claim 1, **characterized in that** the line-by-line traversing is performed by carrying out a number of grinding strokes in which the grinding tool (5) is moved in radial direction (r) relative to the rotor (1, 2) or to the workpiece having a helical profile.

3. Method according to claim 1, **characterized in that** the line-by-line traversing is performed by carrying out a number of grinding strokes in which the grinding tool (5) is moved in axial direction (a) relative to the rotor (1, 2) or to the workpiece having a helical profile.

4. Method according to claim 1, **characterized in that** the line-by-line traversing is performed by carrying out a number of grinding strokes in which the grinding tool (5) is moved in combination in radial direction (r) and in axial direction (a) relative to the rotor (1, 2) or to the workpiece with a helical profile.

5. Method according to one of claims 1 to 4, **characterized in that** as grinding wheel (5) a steel base body tool is used which is coated with an abrasive material bonded to the steel base body by means of galvanic coating.

6. Method according to one of claims 1 to 5, **characterized in that** during grinding of the groove-shaped recesses (3, 4) the axis of rotation (a) of the rotor (1, 2) or of the workpiece with a helical profile and the radial infeed movement (r) of the grinding wheel (5) are changed relative to another in an interpolating manner.

7. Method according to one of claims 1 to 5, **characterized in that** during grinding of the groove-shaped recesses (3, 4) the axis of rotation (a) of the rotor (1, 2) or of the workpiece with a helical profile and the feed axis (v) in the direction of the axis of rotation (a) of the rotor (1, 2) or of the workpiece with a helical profile relative are changed relative to another in an interpolating manner.

8. Method according to claim 6 or 7, **characterized in that** during grinding of the groove-shaped recesses (3, 4) furthermore the swivel axis (B) of the grinding tool (5) and/or the feed axis (t) of the grinding wheel (5) in axial direction (b) of the grinding wheel (5) are interpolatingly changed.

## Revendications

1. Procédé de fabrication d'un rotor (1,2) d'un compresseur à vis ou d'une pièce à profil hélicoïdal, le rotor (1, 2) ou la pièce à profil hélicoïdal présentant sur sa circonférence extérieure un certain nombre de profils s'étendant en hélice sous la forme d'évidements (3, 4) en forme de rainure, les évidements (3, 4) en forme de rainure étant usinés finement au moyen d'un outil de meulage (5) afin de réaliser un profilage précis, l'usinage fin des évidements (3, 4) en forme de rainure étant effectué avec un outil de meulage (5) qui vient en contact avec la surface de l'évidement (3, 4) en forme de rainure seulement à un endroit (P) pendant le processus de meulage, la totalité de la surface à traiter étant effectuée par usure ligne par ligne de la surface à traiter à l'aide de l'outil de meulage (5),
**caractérisé en ce que**
les évidements (3, 4) en forme de rainure du rotor (1, 2) ou de la pièce à profil hélicoïdal présentent une pente variable ou un profil variable sur le tracé axial du rotor (1, 2) ou de la pièce avec un profil hélicoïdal, un outil de meulage (5) en forme de disque de meulage étant utilisé, la portion abrasive du disque de meulage (5) présentant un profil gothique (6) en coupe radiale.

2. Procédé selon la revendication 1, **caractérisé en ce que** l'usure ligne par ligne est effectuée par un certain nombre de courses de meulage au cours desquelles l'outil de meulage (5) est déplacé dans la direction radiale (r) par rapport au rotor (1, 2) ou à la pièce à profil hélicoïdal.

3. Procédé selon la revendication 1, **caractérisé en ce que** l'usure ligne par ligne est effectuée par un certain nombre de courses de meulage au cours desquelles l'outil de meulage (5) est déplacé dans la direction axiale (a) par rapport au rotor (1, 2) ou à la pièce à profil hélicoïdal.

4. Procédé selon la revendication 1, **caractérisé en ce que** l'usure ligne par ligne est effectuée par un certain nombre de courses de meulage dans lesquelles l'outil de meulage (5) est déplacé, de manière combinée dans la direction radiale (r) et dans la direction axiale (a), par rapport au rotor (1, 2) ou à la pièce à profil hélicoïdal.

5. Procédé selon l'une des revendications 1 à 4, **caractérisé en ce qu'**un outil à corps de base en acier, qui est recouvert d'un matériau abrasif qui est lié au corps de base en acier au moyen d'un revêtement galvanique, est utilisé comme disque de meulage (5).

6. Procédé selon l'une des revendications 1 à 5, **caractérisé en ce que**, lors du meulage d'évidements (3, 4) en forme de rainure, l'axe de rotation (a) du rotor (1, 2) ou de la pièce à profil hélicoïdal et le mouvement d'avance radial (r) du disque de meulage (5) peuvent être modifiés par interpolation l'un par rapport à l'autre.

7. Procédé selon l'une des revendications 1 à 5, **caractérisé en ce que**, lors du meulage des évidements (3, 4) en forme de rainure, l'axe de rotation (a) du rotor (1, 2) ou de la pièce à profil hélicoïdal et l'axe de progression (v) dans la direction de l'axe de rotation (a) du rotor (1, 2) ou de la pièce à profil hélicoïdal peuvent être modifiés par interpolation l'un par rapport à l'autre.

8. Procédé selon la revendication 6 ou 7, **caractérisé en ce que**, lors du meulage des évidements (3, 4) en forme de rainure, l'axe de pivotement (B) de l'outil de meulage (5) et/ou l'axe de progression (t) du disque de meulage (5) dans la direction axiale (b) du disque de meulage (5) peuvent être modifiés par interpolation.
